# EUROPEAN PATENT APPLICATION

(11) **EP 4 660 051 A1**
(43) Date of publication of application: **10.12.2025**
(21) Application number: 24749599.7
(22) Date of filing: 25.01.2024
(51) Int. Cl.: B62D 1/18, B62D 1/185, B62D 1/181

(54) **HEIGHT ADJUSTMENT MECHANISM, STEERING SYSTEM AND VEHICLE**

(30) Priority: 30.01.2023 CN 202320194771 U
(71) Applicant: Beijing Chehejia Automobile Technology Co., Ltd., Beijing 101300 (CN)
(72) Inventor: PAN, Yishan, Beijing 101300 (CN); DENG, Ke, Beijing 101300 (CN); ZHAO, Liang, Beijing 101300 (CN); YI, Yongliang, Beijing 101300 (CN); YAN, Guohui, Beijing 101300 (CN)
(74) Representative: Maiwald GmbH
(86) International application number: PCT/CN2024/073996
(87) International publication number: WO 2024/160118

(57) **Abstract**

A height adjustment mechanism, a steering system and a vehicle. The height adjustment mechanism comprises: a transmission block, and a first driving rod (1) and a second driving rod (2) which are arranged in parallel with a steering shaft, wherein the second driving rod (2) is coaxially sleeved on the first driving rod (1); a first end of the first driving rod (1) is configured to connect to an output shaft of an electric motor, and a second end of the first driving rod (1) is connected to the second driving rod (2); and the transmission block is configured to fixedly connect to a second tubular column (32), and the first driving rod (1) is in threaded connection with the transmission block. By means of the mechanism, the response efficiency of the entire height adjustment mechanism is improved, and the driving experience of a driver can be significantly improved; moreover, the axial dimension of the entire height adjustment mechanism can be effectively reduced, and thus the difficulty of arranging the entirety of the height adjustment mechanism on a vehicle body is further reduced.

## Description

### CROSS-REFERENCE TO RELATED APPLICATION

The present application is based on and claims priority to Chinese Patent Application No. 202320194771.3, filed on January 30, 2023, the entire content of which is incorporated herein by reference.

### FIELD

The present invention relates to the field of vehicle steering system technologies, and more particularly to a height adjustment mechanism, a steering system and a vehicle.

### BACKGROUND

A steering wheel is an important component in a steering system of a vehicle and is able to convert a torque applied by a driver on it into wheel rotation through a steering column, thereby achieving vehicle steering. Before driving, the driver typically needs to adjust a distance between the steering wheel and the driver through a height adjustment mechanism to improve driving comfort.

In the related arts, in order to increase an adjustable range of the height adjustment mechanism, a single long lead screw will be used to complete a height adjustment of the steering wheel. This structure not only has a slow response speed during the height adjustment of the steering wheel, affecting the driver's user experience, but also occupies a large space in an axial direction of the lead screw, increasing the difficulty of arranging a steering system on a vehicle body.

### SUMMARY

In order to solve the above technical problems, the present invention provide a height adjustment mechanism, a steering system, and a vehicle.

In a first aspect, the invention provides a height adjustment mechanism, configured to be arranged on a steering column assembly. The steering column assembly includes a steering shaft connected to a steering wheel, a first column sleeved on the steering shaft, and a second column sleeved on the first column, and the first column being axially slidable within the second column, wherein the height adjustment mechanism comprises a transmission block, and a first driving rod and a second driving rod both arranged parallel to the steering shaft,
wherein the second driving rod is coaxially sleeved on the first driving rod; a first end of the first driving rod is configured to be connected to an output shaft of a motor, a second end of the first driving rod is in radial male-female fit with an inner wall of the second driving rod to form a circumferential limiting structure, and the second end of the first driving rod has an sliding groove extending along an axial direction of the second end of the first driving rod , and the sliding groove is slidably connected to the inner wall of the second driving rod;
the transmission block is configured to be fixedly connected to the second column, and the first driving rod is in threaded connection with the transmission block; and
the second driving rod is configured to be in threaded connection with the first column, and a first end of the second driving rod is rotatably connected to the transmission block.

In some embodiments, the first driving rod is further sleeved with a first nut, and the first nut is in threaded connection with the first driving rod and mounted on the transmission block.

In some embodiments, the second end of the first driving rod is coaxially provided with a spline block, the inner wall of the second driving rod is axially provided with a spline groove fitted with the spline block, a tooth of the spline block is in radial male-female fit with the spline grooves, and the sliding groove is formed between two adjacent teeth on the spline block.

In some embodiments, a second end of the second driving rod has a first limiting member, the second driving rod is connected to the first column through a first connecting bracket, the second driving rod is in threaded connection with the first connecting bracket, and when the first connecting bracket moves to the second end of the second driving rod, the first connecting bracket abuts against the first limiting member.

In some embodiments, the first limiting member is sleeved on and in threaded connection with the second driving rod.

In some embodiments, the first connecting bracket is provided with a second nut in threaded connection with the second driving rod.

In some embodiments, an end of the spline block has a second limiting member, and the second limiting member is fixed to the second end of the first driving rod to axially limit the spline block.

In some embodiments, the transmission block is provided with a sliding block, and the sliding block has a nut groove configured to mount the first nut, and the nut groove is configured to circumferentially limit the first nut; and the transmission block is further provided with a retaining bracket arranged at an opening of the nut groove and abutting against an end face of the first nut.

In some embodiments, the sliding block has a rotary groove configured to be rotatably connected to the first end of the second driving rod.

In a second aspect, the present invention provides a steering system using the height adjustment mechanism as described above, the steering system further includes a steering column assembly, the steering column assembly includes a steering shaft connected to a steering wheel, a first column sleeved on the steering shaft, and a second column sleeved on the first column, and the first column is axially slidable within the second column.

In some embodiments, the steering system further includes a third column sleeved on the second column and connected to a vehicle body, in which the second column is axially slidable within the third column, and the second column has a first sliding groove slidably fitted with a first connecting bracket.

In some embodiments, the third column has a second sliding groove slidably fitted with a transmission block.

In a third aspect, the present invention provides a vehicle using the steering system as described above.

When the height adjustment mechanism provided by the present invention performs a height adjustment, the motor is first activated, an output shaft of the motor drives the first driving rod to rotate, and the first driving rod drives the second driving rod to rotate together. Since the first driving rod is in threaded connection with the transmission block, the first driving rod will drive the transmission block to slide toward the first end or the second end of the first driving rod when the first driving rod rotates. Since the second driving rod is rotatably connected to the transmission block, the transmission block will drive the second driving rod to move axially. It should be noted that the second driving rod itself also rotates at this time, and the self-rotation of the second driving rod drives the first column to slide in a same direction as the transmission block through threads. With the arrangement of the transmission block, the first driving rod and the second driving rod sleeved on the first driving rod, the height adjustment mechanism may use the rotation of the second driving rod itself and the rotation of the first driving rod itself, as well as the axial movement of the second driving rod, to drive the first column and the second column to achieve synchronous extension or retraction, thus significantly improving the response efficiency of the entire height adjustment mechanism and markedly enhancing the driver's real-time experience. Moreover, during the movement of the second driving rod, a part or all of the first driving rod may be retracted into the second driving rod, thus effectively shortening the axial dimension of the entire height adjustment mechanism and further reducing the difficulty of arranging the entirety of the height adjustment mechanism on the vehicle body.

### BRIEF DESCRIPTION OF THE DRAWINGS

The drawings herein are incorporated into the specification and form a part of the specification, show embodiments that comply with the present invention, and are used to explain the principles of the present invention together with the specification.

In order to more clearly explain the technical solution of embodiments of the present invention or in the related arts, the drawings required to be used in the description of embodiments or the related art will be briefly described below, and it is obvious that for those skilled in the art, other drawings may be obtained according to these drawings without inventive labor.
FIG. 1 is a schematic view of a height adjustment mechanism in an extended state according to an embodiment of the present invention.
FIG. 2 is a schematic view of a height adjustment mechanism in a retracted state according to an embodiment of the present invention.
FIG. 3 is a sectional view of a height adjustment mechanism according to an embodiment of the present invention.
FIG. 4 is a schematic view of a first driving rod of a height adjustment mechanism according to an embodiment of the present invention.
FIG. 5 is a schematic view of a sliding block of a height adjustment mechanism according to an embodiment of the present invention.
1 first driving rod; 11 spline block; 12 second limiting member; 2 second driving rod; 21 first limiting member; 31 first column; 32 second column; 321 first sliding groove; 33 third column; 331 second sliding groove; 41 first nut; 42 second nut; 51 first connecting bracket; 52 second connecting bracket; 521 sliding block; 5211 nut groove; 522 retaining bracket.

### DETAILED DESCRIPTION

In order to more clearly understand the purpose, features and advantages of the present invention, embodiments of the present invention will be further described below. It should be noted that the embodiments of the present invention and the features in the embodiments can be combined with each other without conflict.

In order to fully understand the present invention, many specific details are explained in the following description, but the present invention can also be implemented in other ways different from those described here; obviously, the embodiments in the description are only a part of embodiments of the present invention, not all embodiments of the present invention.

Based on the above description, embodiments of the present invention provide a height adjustment mechanism, a steering system, and a vehicle. When the height adjustment mechanism performs a height adjustment, a motor is first activated, an output shaft of the motor drives a first driving rod to rotate, and the first driving rod drives a second driving rod to rotate together. Since the first driving rod is in threaded connection with a transmission block, when the first driving rod rotates, the first driving rod will drive the transmission block to slide toward a first end or a second end of the first driving rod. Since the second driving rod is rotatably connected to the transmission block, the transmission block will drive the second driving rod to move axially. It should be noted that the second driving rod itself also rotates at this time, and the self-rotation of the second driving rod drives a first column to slide in a same direction as the transmission block through threads. The height adjustment mechanism, through the arrangement of the transmission block, the first driving rod and the second driving rod sleeved on the first driving rod, may drive the first column and a second column to achieve synchronous extension or synchronous retraction with the rotation of the second driving rod itself and the rotation of the first driving rod itself, as well as the axial movement of the second driving rod, significantly improving the response efficiency of the entire height adjustment mechanism and markedly enhancing the driver's driving experience. Moreover, during the movement of the second driving rod, a part or all of the first driving rod may be retracted into the second driving rod, thus effectively shortening an axial dimension of the entire height adjustment mechanism and further reducing the difficulty of arranging the entirety of the height adjustment mechanism on a vehicle body. A detailed explanation is provided through specific embodiments below.

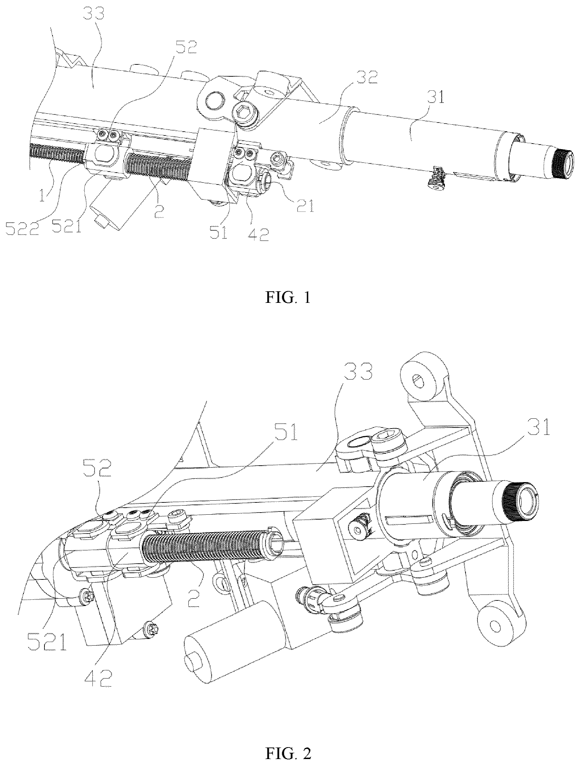

Referring to FIGS. 1 to 5, in a first aspect, embodiments of the present invention provide a height adjustment mechanism suitable for installation on a steering column assembly. The steering column assembly includes a steering shaft connected to a steering wheel, a first column 31 sleeved on the steering shaft, a second column 32 sleeved on the first column 31, and a third column 33 sleeved on the second column 32. The third column 33 is connected to the vehicle body. The first column 31 is axially slidable within the second column 32, and/or the second column 32 is axially slidable within the third column 33. The height adjustment mechanism includes a transmission block, a first driving rod 1 and a second driving rod 2. The first driving rod 1 and the second driving rod 2 are arranged parallel to the steering shaft. The second driving rod 2 is coaxially sleeved on the first driving rod 1. A first end of the first driving rod 1 is configured to be connected to an output shaft of a motor, and a second end of the first driving rod 1 is in radial male-female fit with an inner wall of the second driving rod 2 to form a circumferential limiting structure. The second end of the first driving rod 1 has a sliding groove extending along its axial direction and the sliding groove is configured to be slidably connected to the inner wall of the second driving rod 2. This arrangement enables the first driving rod 1 to drive the second driving rod 2 to rotate, and these two driving rods may also undergo a relative axial sliding. The transmission block is arranged on the second column 32, and the first driving rod 1 is in threaded connection with the transmission block. The second driving rod 2 is in threaded connection with the first column 31, and a first end of the second driving rod 2 is rotatably connected to the transmission block.

When the height adjustment mechanism performs a height adjustment, the motor is first activated, the output shaft of the motor drives the first driving rod 1 to rotate, and the first driving rod 1 drives the second driving rod 2 to rotate together. Since the first driving rod is in threaded connection with the transmission block, the first driving rod will drive the transmission block to slide toward the first end or the second end of the first driving rod 1 when the first driving rod rotates. Since the second driving rod 2 is rotatably connected to the transmission block, the transmission block will drive the second driving rod 2 to move axially. It should be noted that the second driving rod 2 itself also rotates at this time, and the self-rotation of the second driving rod 2 drives the first column 31 to slide in a same direction as the transmission block through threads. With the arrangement of the transmission block, the first driving rod 1 and the second driving rod 2 sleeved on the first driving rod 1, the height adjustment mechanism may use the rotation of the second driving rod 2 itself and the rotation of the first driving rod 1 itself, as well as the axial movement of the second driving rod 2, to drive the first column 31 and the second column 32 to achieve synchronous extension or synchronous retraction, significantly improving the response efficiency of the entire height adjustment mechanism and markedly enhancing the driver's driving experience. Moreover, during the movement of the second driving rod 2, a part or all of the first driving rod 1 may be retracted into the second driving rod 2, thus effectively shortening the axial dimension of the entire height adjustment mechanism and further reducing the difficulty of arranging the entirety of the height adjustment mechanism on the vehicle body.

In some embodiments, the first driving rod 1 may be in threaded connection with the second driving rod 2, and the second driving rod 2 may be fixed to the first column 31. The motor drives the first driving rod 1 to rotate, and the first driving rod 1 directly drives the second driving rod 2 to move axially by means of threads, thus driving the first column 31 to complete a telescopic action, and then realizing a height adjustment of the steering wheel.

Continuing to refer to FIGS. 1 to 4, the second driving rod 2 is connected to the first column 31, and a first nut 41 is further sleeved on the first driving rod 1. The first nut 41 is in threaded connection with the first driving rod 1, and the first nut 41 is mounted on the transmission block. By directly arranging the nut structure on the transmission block, a processing cost of the transmission block may be reduced, and a self-structure of the transmission block may be simplified.

In further embodiments, the second end of the first driving rod 1 is coaxially provided with a spline block 11, and the inner wall of the second driving rod 2 is axially provided with a spline groove fitted with the spline block 11. Teeth of the spline block 11 are in radial male-female fit with the spline groove, and a sliding groove is formed between two adjacent teeth of the spline block 11. It should be understood that the spline groove is arranged axially, so that when the first driving rod 1 drives the second driving rod 2 to rotate, the second driving rod 2 may slide axially on an outer surface of the first driving rod 1. The second driving rod 2 is connected to the first column 31 through a first connecting bracket 51, and the second driving rod 2 is in threaded connection with the first connecting bracket 51. The first end of the second driving rod 2 is rotatably connected to the first nut 41. Since an outer wall of the second driving rod 2 needs to be in threaded connection with the first connecting bracket 51, the inner wall being configured as the spline structure may avoids conflicts caused by simultaneous operations of internal and external threads.

In some embodiments, a second end of the second driving rod 2 (i.e., a end of the second driving rod 2 away from the first driving rod 1) is provided with a first limiting member 21. The second driving rod 2 is connected to the first column 31 through the first connecting bracket 51, and the second driving rod 2 is in threaded connection with the first connecting bracket 51. When the first connecting bracket 51 moves to the second end of the second driving rod 2, the first connecting bracket 51 abuts against the first limiting member 21. The arrangement of the first limiting member 21 may prevent the first connecting bracket 51 from slipping off the second driving rod 2.

In further embodiments, the first limiting member 21 is sleeved on the second driving rod 2 and is in threaded connection with the second driving rod 2. That is, an axial fixation of the first limiting member 21 may be achieved through threaded fit, thus ensuring the reliability of the limiting function of the first limiting member 21 for the first connecting bracket 51. Moreover, it is convenient for disassembly of the first limiting member 21 and more convenient for installation and disassembly of the entire height adjustment mechanism.

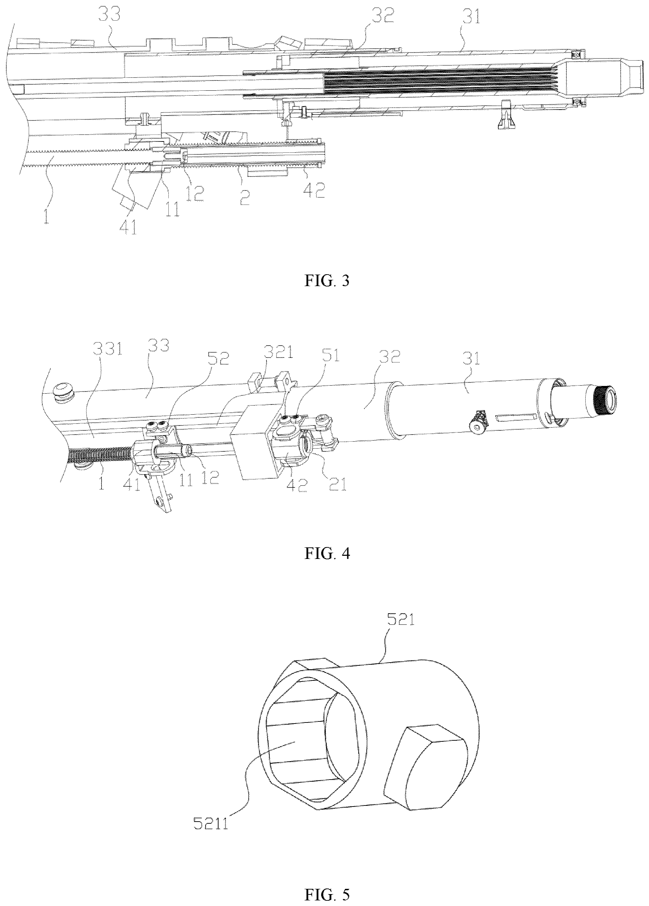

Continuing to refer to FIGS. 3 and 4, an end of the spline block 11 is provided with a second limiting member 12. The second limiting member 12 is fixed to the second end of the first driving rod 1 and is configured to axially limit the spline block 11.

Continuing to refer to FIGS. 1 to 4, a second nut 42 is arranged on the first connecting bracket 51. The second driving rod 2 is in threaded connection with the second nut 42, and the first limiting member 21 axially limits the second nut 42, thus axially limiting the first connecting bracket 51 and the first column 31.

Continuing to refer to FIGS. 1 to 4, the first nut 41 is connected to the second column 32 through the transmission block. It should be understood that the first nut 41 is fixed on the transmission block, the first driving rod 1 rotates to cause the first nut 41 to undergo an axial displacement, and the first nut 41 will drive the second column 32 to move through the transmission block.

It should be understood that the transmission block may be a same support structure as the first connecting bracket 51. That is, the transmission block may be a second connecting bracket 52. The arrangement of the first connecting bracket 51 and the second connecting bracket 52 may facilitate the installation of the first nut 41 and the second nut 42, and the first connecting bracket 51 and the second connecting bracket 52 may be shaped in an irregular shape according to a shape of a steering system at the corresponding position.

Continuing to refer to FIG. 5, the transmission block (i.e., the second connecting bracket 52) is provided with a sliding block 521. The sliding block 521 has a nut groove 5211 for mounting the first nut 41, and the nut groove 5211 is configured to circumferentially limit the first nut 41. The second connecting bracket 52 is further provided with a retaining bracket 522 arranged at an opening of the nut groove 5211 and abutting against an end face of the first nut 41. It should be noted that the first nut 41 may be slidably inserted into the sliding block 521 through the arrangement of the nut groove 5211 and be fixedly connected to the sliding block 521 through the arrangement of the retaining bracket 522 and the shape of an inner wall of the nut groove 5211. This fixing method is simpler and more convenient for installation and disassembly of the entire height adjustment mechanism.

In some embodiments, the sliding block 521 has a rotary groove configured to be rotatably connected to the first end of the second driving rod 2.

In a second aspect, the present invention provides a steering system using the height adjustment mechanism as described above. The steering system further includes a steering column assembly. The steering column assembly includes a steering shaft connected to a steering wheel, a first column 31 sleeved on the steering shaft, a second column 32 sleeved on the first column 31, and a third column 33 sleeved on the second column 32. The third column 33 is connected to a vehicle body. The first column 31 is axially slidable within the second column 32, and the second column 32 is axially slidable within the third column 33.

In some embodiments, the second column 32 has a first sliding groove 321 slidably fitted with the first connecting bracket 51.

In further embodiments, the third column 33 has a second sliding groove 331 slidably fitted with the second connecting bracket 52.

Through the arrangement of the first sliding groove 321 and the second sliding groove 331, an axial length of the entire height adjustment mechanism may be further shortened, so that the entire mechanism is more compact.

In a third aspect, the present invention provides a vehicle using the steering system as described above.

The specific implementation method and principle of the steering system and the vehicle are the same as those in the above embodiments, and may bring the same or similar technical effects, which will not be repeated here. For details, reference may be made to the description of the above embodiments of the height adjustment mechanism.

It should be noted that in the present invention, relative terms such as "first" and "second" are only used to distinguish one entity or operation from another entity or operation, and do not necessarily require or imply any such actual relationship or order between these entities or operations. Furthermore, the term "include", "comprise" or any other variation thereof is intended to cover non-exclusive inclusions such that a process, a method, an object, or a device comprising a series of elements includes not only those elements, but also other elements that are not expressly listed, or also includes elements inherent in such process, method, object, or device. Without further limitation, an element defined by the phrase "comprising a ..." does not exclude the presence of additional identical elements in the process, method, object or device comprising the element.

The above description is only specific embodiments of the present invention, so that those skilled in the art can understand or implement the present invention. Various modifications to these embodiments will be apparent to those skilled in the art, and the general principles defined herein may be implemented in other embodiments without departing from the scope of the present invention. Therefore, the present invention will not be limited to the embodiments described herein, but is to be accorded the widest scope consistent with the principles and novel features disclosed herein.

## Claims

1. A height adjustment mechanism, configured to be arranged on a steering column assembly, the steering column assembly comprising a steering shaft connected to a steering wheel, a first column sleeved on the steering shaft and a second column sleeved on the first column, and the first column being axially slidable within the second column, wherein the height adjustment mechanism comprises a transmission block, and a first driving rod and a second driving rod both arranged parallel to the steering shaft,
wherein the second driving rod is coaxially sleeved on the first driving rod; a first end of the first driving rod is configured to be connected to an output shaft of a motor, a second end of the first driving rod is in radial male-female fit with an inner wall of the second driving rod to form a circumferential limiting structure, and the second end of the first driving rod has an sliding groove extending along an axial direction of the second end of the first driving rod, and the sliding groove is slidably connected to the inner wall of the second driving rod;
the transmission block is configured to be fixedly connected to the second column, and the first driving rod is in threaded connection with the transmission block; and
the second driving rod is configured to be in threaded connection with the first column, and a first end of the second driving rod is rotatably connected to the transmission block.

2. The height adjustment mechanism according to claim 1, wherein the first driving rod is further sleeved with a first nut, and the first nut is in threaded connection with the first driving rod and mounted on the transmission block.

3. The height adjustment mechanism according to claim 2, wherein the second end of the first driving rod is coaxially provided with a spline block, the inner wall of the second driving rod is axially provided with a spline groove fitted with the spline block, a tooth on the spline block is in radial male-female fit with the spline groove, and the sliding groove is formed between two adjacent teeth on the spline block.

4. The height adjustment mechanism according to claim 3, wherein a second end of the second driving rod has a first limiting member, the second driving rod is connected to the first column through a first connecting bracket, the second driving rod is in threaded connection with the first connecting bracket, and when the first connecting bracket moves to the second end of the second driving rod, the first connecting bracket abuts against the first limiting member.

5. The height adjustment mechanism according to claim 4, wherein the first limiting member is sleeved on and in threaded connection with the second driving rod.

6. The height adjustment mechanism according to claim 4, wherein the first connecting bracket is provided with a second nut in threaded connection with the second driving rod.

7. The height adjustment mechanism according to claim 3, wherein an end of the spline block has a second limiting member, and the second limiting member is fixed to the second end of the first driving rod to axially limit the spline block.

8. The height adjustment mechanism according to claim 3, wherein the transmission block is provided with a sliding block, and the sliding block has a nut groove configured to mount the first nut, and the nut groove is configured to circumferentially limit the first nut; and
the transmission block is further provided with a retaining bracket arranged at an opening of the nut groove and abutting against an end face of the first nut.

9. The height adjustment mechanism according to claim 8, wherein the sliding block has a rotary groove configured to be rotatably connected to the first end of the second driving rod.

10. A steering system, comprising the height adjustment mechanism according to any one of claims 1 to 9, and further comprising a steering column assembly, wherein the steering column assembly comprises a steering shaft connected to a steering wheel, a first column sleeved on the steering shaft, and a second column sleeved on the first column, and the first column is axially slidable within the second column.

11. The steering system according to claim 10, further comprising a third column sleeved on the second column and connected to a vehicle body, wherein the second column is axially slidable within the third column, the second column has a first sliding groove slidably fitted with a first connecting bracket, and the third column has a second sliding groove slidably fitted with the transmission block.

12. A vehicle, comprising the steering system according to claim 10 or 11.
